Europäisches Patentamt

European Patent Office

Office européen des brevets

(19)

(11) Veröffentlichungsnummer: **0 248 398**
**A2**

(12) **EUROPÄISCHE PATENTANMELDUNG**

(21) Anmeldenummer: **87107956.2**

(22) Anmeldetag: **02.06.87**

(51) Int. Cl.³: **B 65 D 30/08**
**B 32 B 27/08**

(30) Priorität: **04.06.86 DE 3618793**

(43) Veröffentlichungstag der Anmeldung:
**09.12.87 Patentblatt 87/50**

(84) Benannte Vertragsstaaten:
**AT BE CH DE FR LI NL**

(71) Anmelder: **Helio Folien Gmbh**
**Gladbacher Strasse 189**
**D-4060 Viersen 1(DE)**

(72) Erfinder: **Engelsberger, Herbert, Dipl.-Ing.(FH)**
**Heimbachstrasse 13**
**D-4060 Viersen 1(DE)**

(54) Verpackungsbeutel.

(57) Eine eckige Faltbeutelverpackung ist aus einer Verbundfolie (1) gebildet, die aus einer mehrlagigen, coextrudierten Folie (6) und einer weiteren Folienschicht (14) besteht, zwischen denen eine Barriereschicht (3) angeordnet ist. Die Barriereschicht (3) ist mit als Gitternetz (13) ausgebildeten Klebstoffschichten (10; 10') mit der mehrlagigen Folie (6) und der weiteren Folienschicht (14) verbunden.

Fig. 1

EP 0 248 398 A2

Croydon Printing Company Ltd.

Beschreibung

Die vorliegende Erfindung betrifft einen
Verpackungsbeutel entspechend dem Oberbegriff des
Patentanspruches 1.

Aus dem Stand der Technik sind zahlreiche
Verpackungsbeutel und Verbundfolien bekannt, bei denen
man versucht hat, das Eigenschaftsspektrum dadurch zu
verbessern, daß zwei oder mehrere Folien
unterschiedlicher Eigenschaften miteinander kombiniert
wurden. Eine vielfach angestrebte
Eigenschaftskombination stellt bei einer als
Verpackungsmaterial einzusetzenden Verbundfolie darauf
ab, einerseits eine hohe Verschweißbarkeit und
andererseits eine ausreichend hohe Reißfestigkeit
einzustellen.

Zur Verbindung verschiedener Folienbahnen dienen
hauptsächlich zwei Techniken, die Coextrusion und das
Kaschieren. Während mittels Coextrusion keine
Verbundfolien mit einer metallischen Folienbahn
hergestellt werden können, bieten die üblichen
Kaschiertechniken hier größere Möglichkeiten, weisen

-2-

aber noch verschiedene Nachteile auf.

Kaschierverfahren mit vollflächigem Klebstoffauftrag
sind beispielsweise beschrieben in der DE-A- 15 04
079, DE-B- 17 79 398, DE-A- 27 57 436 und der DE-C- 25
49 227.

Die hierbei entstehenden Nachteile liegen infolge des
vollflächigen Klebstoffauftrages in wirtschaftlicher
Hinsicht in erhöhten Kosten. Weitaus schwerwiegender
ist aber eine sich ebenfalls aus dem vollflächigen
Klebstoffauftrag ergebende ungünstige Eigenschaft der
hergestellten Verbundfolie, die mit dem
branchenüblichen Begriff "dead-fold-Verhalten"
bezeichnet wird. Man spricht von einer Folie mit
ungünstigem dead-fold-Verhalten, wenn eine aus einer
solchen Folie hergestellte Verpackungeinheit während
des Maschinendurchlaufs, d.h. bei der Herstellung der
Verpackungseinheit und beim Einfüllen des
Verpackungsgutes, die vorgegebene Faltung nicht mit
ausreichender Genauigkeit beibehält.

Ein sehr gutes dead-fold-Verhalten hat beispielsweise
eine Aluminiumfolie, die mit großer Treue eine
vorgegebene Faltung bewahrt. Aluminiumfolien sind mit
wenigen Ausnahmen für sich alleine aber nicht als
Verpackungsmaterial geeignet und werden deshalb mit
zumeist thermoplastischen Kunststoffolien laminiert,
wobei sie ihr hervorragendes dead-fold-Verhalten
jedoch zum Teil verlieren.

Man hat auch bereits vorgeschlagen, den
Klebstoffauftrag in gemusterter Form vorzunehmen. Ein solcher Vorschlag findet sich in der DE-A- 17 04 901
bei einer zur Herstellung von technischen
Versandbeuteln bzw. -säcken vorgesehenen Verbundfolie,
die mehrere Folienschichten auf Polyolefinbasis
aufweist und bei der zwei Folienschichten durch eine
musterförmig aufgebrachte Klebstoffschicht verbunden
sind. Die gezeigten Muster des Klebstoffauftrages
zeigen u.a. ein Netzmuster, das aus ununterbrochenen
und sich schneidenden Streifen besteht, wobei die
Streifen klebstoffreie Flächen ohne Unterbrechung
umschließen. Diese ältere Verbundfolie hat zwar eine
verbesserte Reißfestigkeit, hinsichtlich der
Ausbildung eines ausreichenden dead-fold-Verhaltens
gibt diese Schrift aber keinen Hinweis, denn dieses
Verhalten ist bei den genannten Versandbeuteln bzw.
-säcken ohne Bedeutung. Auch ist in dieser Schrift die
Ausbildung einer gegenüber Luftsauerstoff dichten
Verpackung nicht angesprochen.

Eine Verpackungsfolie mit einer innen liegenden
Barriereschicht aus z.B. Metall, und einer mit einer
ersten Klebstoffschicht damit verbundenen Folie aus
z.B. Polyäthylen, sowie einer auf der anderen Seite
der Metallfolie angeordneten heißsiegelfähigen
Schicht, ist in der EP-A- 118 212 beschrieben. Die
heißsiegelfähige Schicht kann mit einer zweiten
Klebstoffschicht mit der Metallfolie verbunden sein.
Die heißsiegelfähige Schicht oder die die Metallfolie
mit der heißsiegelfähigen Schicht verbindende zweite
Klebstoffschicht kann in Form eines Druckmusters
aufgebracht werden, wobei die heißsiegelfähige Schicht
entfallen kann, falls die Klebstoffschicht
heißsiegelfähig ausgebildet ist. Es ist dabei

-4-

vorgesehen, die heißsiegelfähige Schicht nur in den
Bereichen aufzubringen, die zur Bildung von
Schweißnähten benötigt werden. Abgesehen von dem
Nachteil, daß die erste Klebstoffschicht zwischen der
Metallfolie und der Polyäthylenfolie vollflächig
ausgebildet ist und damit die bereits diskutierten
Nachteile aufweist, gibt diese Schrift keinen Hinweis
zur Ausbildung des Druckmusters, das zur Aufbringung
der zweiten Klebstoffschicht bzw. der
heißsiegelfähigen Schicht dienen soll.

Auch in der EP-A- 46 823 wird neben anderen
Auftragsverfahren für das Klebemittel, wie z.B.
Walzenauftrag, Luftbürste, Rakelvorrichtung oder
Aufsprühen, auch Tiefdruck erwähnt, jedoch ohne einen
Hinweis auf das Druckmuster oder den Bedeckungsgrad.

In gleicher Weise gilt dies auch für die ein
Laminierungsverfahren zur Herstellung flexibler
Verbundfolien betreffende EP-A- 56 452.

Die EP-A- 97 206 beschreibt einen diskreten und
diskontinuierlichen, nicht linearen Klebstoffauftrag.
Es wird eine Zweikomponentenmischung verwendet und
dabei die erste Komponente auf eine Folienbahn und die
zweite Komponente auf eine andere Folienbahn
aufgetragen und diese beiden Folienbahnen unter
Vereinigung der beiden Komponenten unter Druck
vereinigt. Dieses Verfahren erfordert ein passgenaues
Arbeiten und ist unter Produktionsbedingungen nicht
immer mit einer hinreichenden Präzision durchführbar.
Für die Herstellung gasundurchlässiger Verbundfolien
ist das Verfahren wegen der zu erwartenden

-5-

Kanalbildung nicht geeignet.

Ein Verpackungsmaterial mit erhöhter Festigkeit, das
aus zwei gereckten Folienbahnen aus thermoplastischem
Material besteht, wobei die Reckachsen der in einer
Achse gereckten Folien sich in einem Winkel von 45 bis
90° kreuzen, und der Folienverbund in einer
Harzschicht aus Äthylen-Äthylacrylat-Mischpolymerisat
zwischen den beiden Folienbahnen besteht, ist aus der
DE-A- 31 32 838 bekannt. Als Auftragsmöglichkeiten für
die Klebstoffschicht werden neben dem Verfahren der
Extrusionsbeschichtung und für eine in Art eines
Schmelzklebers verwendete Klebstoffschicht neben den
bekannten Beschichtungsverfahren mittels Metallstab,
Luftrakel oder Walzenspalt auch das
Tiefdruckbeschichtungsverfahren beschrieben. Ein
Hinweis auf die Art und Weise, mit welchem
Bedeckungsgrad oder in welchem Muster die
Klebstoffschicht mittels Tiefdruck aufzubringen ist,
ist dieser Schrift nicht zu entnehmen.

Man hat auch bereits blattförmige Materialien mit
einer Aluminiumschicht in Form einer Aluminiumfolie
hergestellt, wobei die Aluminiumfolie mit einer
weiteren Bahn eines durchsichtigen oder
durchscheinenden Materials, z.B. einem durchsichtigen
Film aus Kunststoffolie, laminiert war. Ein solcher
Vorschlag findet sich in der DE-A- 19 53 691. Zur
Verbindung der Aluminiumfolie mit der durchsichtigen
Kunststoffolie wird eine musterförmig aufgetragene und
gefärbte Klebstoffschicht vorgeschlagen. Dieser
Vorschlag zielt jedoch mehr auf eine dekorative
Wirkung ab und das gezeigte Muster der

-6-

Klebstoffschicht ist punkt- bzw. kreisförmig und für die Herstellung luftdicht abschließender Verpackungen nicht geeignet.

Schließlich beschreibt die DE-A- 27 26 605 eine Aluminium-Kunststoffverbundfolie, die zur Herstellung eines Verpackungsmaterials zur Aufnahme von empfindlichen Füllgütern, wie Lebensmittel und anderen, vorgesehen ist. Die Kraftaufnahme der mit der Aluminiumfolie zu kaschierenden Kunststoffolien soll größer sein als die Kraftaufnahme der Aluminiumfolie und die Kunststofolien sollen eine zwischen 80 und 180 % liegende Reißdehnung aufweisen. Zur Verbindung von Kunststoffolie und Aluminiumfolie dient eine haftvermittelnde Schicht eines Kaschierklebers, der mittels einer nicht näher dargestellten Rasterwalze aufgetragen werden kann. Bei dieser vorwiegend für den Tiefzug konzipierten Verbundfolie muß zur Erzielung eines ausreichenden Verbundes zwischen Aluminium- und Kunststofolien der Auftrag des Kaschierklebers in einer solchen Menge mit einem nahezu vollflächig ausgebildeten Auftragsmuster erfolgen, damit die angestrebte hohe Verbundfestigkeit zwischen den einzelnen Folienbahnen erreicht wird. Es entsteht damit wieder der Nachteil eines nicht befriedigenden dead-fold-Verhaltens.

Die vorliegende Erfindung will den bekannten, aus einer Verbundfolie hergestellten Verpackungsbeutel dahingehend weiter entwickeln, daß er sowohl über eine gute Reißfestigkeit, insbesondere eine hohe Durchstoßfestigkeit, als auch über ein gutes dead-fold-Verhalten verfügt, wobei der Versandbeutel

0248398

-7-

auch in dekorativer Hinsicht ansprechen soll.

Die Erfindung sieht ihre Aufgabe auch darin, einen Verpackungsbeutel zur Verfügung zu stellen, der dem Verpackungsgut einen ausreichenden Schutz gegenüber Luftsauerstoff bietet, so daß auch die Verpackung von gegenüber Sauerstoff empfindlichen Lebensmitteln ermöglicht wird.

Zur Lösung dieser Aufgabe sieht die Erfindung bei einem Verpackungsbeutel gemäß dem Oberbegriff des Patentanspruches 1 dessen kennzeichnende Merkmale vor.

Dadurch, daß die zur Herstellung des Verpackungsbeutels eingesetzte Verbundfolie aus einer mehrlagigen Folie, hergestellt aus dem im Patentanspruch 1 näher beschriebenen koextrudierten, zusammengelegten Blasschlauch besteht, ergibt sich eine besonders gute Durchstoßfestigkeit, wobei diese noch gesteigert werden kann, wenn zur Herstellung der Außenlagen oder Innenlagen ein Polyäthylen/Vinylacetatcopolymeres, insbesondere mit 3 bis 10 Gew.% Vinylacetat Anwendung findet. Die Herstellung einer solchen mehrlagigen Folie ist in der DE-A- 32 16 097 näher beschrieben. Die gewünschte Undurchlässigkeit gegenüber Luftsauerstoff läßt sich dadurch einstellen, daß die bis zu drei Zwischenlagen aus z.B. Polyvinylidenchlorid (PvdC), Polyamid oder aus Äthylenvinylalkohol (EVOH) hergestellt sind.

Die weitere Folienschicht, die durch die Klebstoffschicht mit der mehrlagigen Folie verbunden

-8-

ist, dient zur Einstellung der jeweils gewünschten
Eigenschaften, wie z.B. der weiteren Verbesserung der
Reißfestigkeit, der Bedruckbarkeit u.ä.

Zur Erzielung einer ausreichenden Verbundfestigkeit
zwischen der mehrlagigen koextrudierten Folie und der
weiteren Folienschicht hat sich eine Ausbildung des
Gitternetzes aus Streifen erwiesen, die eine Breite
von 0,5 bis 1,5 mm, vorzugsweise zwischen 0,8 und 1,2
mm aufweisen und die sowohl eine hohe
Verbundfestigkeit als auch ein ausgezeichnetes
dead-fold-Verhalten bewirken.

Bei einer solchen Verbundfolie, bei der die
Klebstoffschicht gewissermaßen nur eine Hilfsschicht
darstellt, ist es an sich überraschend, daß die von
dieser Klebstoffschicht ausgehende Wirkung das
dead-fold-Verhalten der Verbundfolie so nachhaltig
beeinflußt. Wie durchgeführte Versuche gezeigt haben,
ist das dead-fold-Verhalten von Verbundfolien, deren
Klebstoffschicht als Gitternetz ausgebildet ist,
wesentlich günstiger als das dead-fold-Verhalten von
vergleichsweise mituntersuchten Verbundfolien gleichen
Aufbaus, bei denen die Klebstoffschicht jedoch
vollflächig ausgebildet ist.

Infolge der Ausbildung der Klebstoffschicht als
Gitternetz, das aus ununterbrochenen und sich
schneidenden Streifen besteht, wobei die Streifen
klebstoffreie Flächen ohne Unterbrechung umschließen,
ist sichergestellt, daß keine seitliche Gasdiffusion
zwischen den einzelnen Schichten entstehen kann, wie
dies z.B. bei den bekannten Punkt- oder Streifenmustern, bei denen an der Schnittkante frei austretende Kanäle entstehen können, der Fall ist.

Weitere Vorteile bestehen in der Klebstoffersparnis, die im Vergleich zu vollflächig aufgetragenen Klebstoffschichten ca. 25 bis 44 % betragen kann. Es hat sich auch gezeigt, daß die Durchstoß- und Knickbruchfestigkeit durch die Ausbildung der Klebstoffschicht als Gitternetz noch zunimmt, was sich dadurch erklärt, daß da, wo kein Klebstoff aufgetragen ist, eine gewisse Ausweich- und Dehnmöglichkeit der einzelnen Folienschichten besteht, ohne daß diese sogleich zerreißen.

Eine besonders bevorzugte Ausführungsform, mit der sich eine besonders gleichmäßige Klebstoffverteilung erzielen läßt, ist durch Anspruch 2 gekennzeichnet.

Eine weitere Verbesserung ist gemäß Anspruch 3 erzielbar, da durch ein derartig ausgebildetes Gitternetz - bei entsprechender Größe der Vierecke - die Gewähr besteht, daß auf der fertigen Verpackungseinheit anzulegende Schweißnähte mit größerer statistischer Sicherheit über den einzelnen Linien des Gitternetzes liegen und dadurch die Gefahr einer Spaltung in die Einzelschichten der Verbundfolie bei Öffnen der Verpackungseinheit kaum gegeben ist. Vorzugsweise sind dabei die Vierecke so ausgebildet, daß eine in Laufrichtung der Folie liegende Diagonale im Bereich von 2 mm und nicht > 2,5 mm ausgebildet ist.

Es ist jedoch auch die Anordnung eines Gitternetzes entsprechend dem Anspruch 4 möglich, wobei die Kreise
des Gitternetzes vorteilhaft so angeordnet sind, daß
die einzelnen Kreislinien jeweils in der Nähe des
Mittelpunktes des benachbarten Kreises verlaufen.

Eine weitere vorteilhafte Ausbildung des Gitternetzes
ergibt sich unter Berücksichtigung der Ansprüche 5 und
6. Durch die gewählte Streifenbreite, den
Flächeninhalt der klebstofffreien Flächen sowie die
Flächeninhaltssumme dieser klebstofffreien Fläche im
Verhältnis zur gesamten Klebstoffschichtfläche (Fläche
der klebstofffreien plus der mit Klebstoff belegten
Fläche) läßt sich das dead-fold-Verhalten der
Verbundfolie in weitem Maße variieren und auf den
jeweiligen Anwendungszweck abstimmen.

Als geeignete Auftragsstärke der Klebstoffschicht hat
sich insbesondere eine Menge Klebstoff von 1,4 bis 2,6
g/m$^2$ erwiesen.

Gemäß einer weiteren bevorzugten Ausführungsform ist
die Verbundfolie gemäß dem Anspruch 8 ausgebildet,
wobei sich insbesondere, wenn gemäß Anspruch 9 das
Gitternetz eingefärbt ist, eine außerordentlich
dekorative Wirkung erzielen läßt. Zur Einfärbung des
Gitternetzes kann z.B. ein lasierend eingefärbter
Kleber verwendet werden. Die weitere Folienschicht
kann von einer biaxial orientierten Kunststoffolie wie
folgt ausgebildet sein:
Polyamid mit einer Dicke von 12 bis 15 µm,
Polypropylen: 15 bis 30 µm,
Polyester:     9 bis 12 µm.

-11-

Wie bereits erwähnt, kann die gewünschte
Barrierewirkung gegenüber Luftsauerstoff durch eine
oder mehrere Zwischenschichten der mehrlagigen,
koextrudierten Folie erzeugt werden. Stehen die
notwendigen Einrichtungen zur Herstellung eines mehr
als zweischichtigen koextrudierten Blasschlauches,
der zur Erzeugung einer solchen mehrlagigen Folie
benötigt wird, nicht zur Verfügung, kann die
gewünschte Barrierewirkung dadurch erzielt werden, daß
eine vierlagige Folie -gebildet aus einem
zweischichtigen, koextrudierten, zusammengelegten
Blasschlauch - mit Hilfe einer als Gitternetz
ausgebildeten Klebstoffschicht mit der einen Seite
einer Barriereschicht verbunden wird, deren andere
Seite mit der weiteren Folienschicht in Verbindung
steht. Gemäß einer weiteren vorteilhaften
Ausführungsform kann diese Barriereschicht aus
Aluminium, Polyvinylidenchlorid (PvdC), Polyamid oder
Äthylenvinylalkohol (EVOH) bestehen. Die Verbindung
dieser Barriereschicht mit der weiteren Folienschicht
erfolgt vorzugsweise mit einer ebenfalls als
Gitternetz ausgebildeten weiteren Klebstoffschicht. Es
hat sich jedoch gezeigt, daß diese weitere
Klebstoffschicht auch vollflächig ausgebildet sein
kann, ohne daß das dead-fold-Verhalten des
Verpackungsbeutels wesentlich beeinträchtigt wird.
Diese Ausführungsform wird bevorzugt, wenn das
Gitternetz nicht sichtbar sein soll. Eine besonders
unter wirtschaftlichen Gesichtspunkten bevorzugte
Ausführungsform der Erfindung besteht in der
Ausbildung einer durch Metallisierung auf der weiteren
Folienschicht erzeugten Barriereschicht. Vorzugsweise
ist die durch Metallisierung aufgebrachte

-12-

Barriereschicht aus Aluminium.

Zur Herstellung der für die Lebensmittelverpackung üblichen Verpackungseinheiten hat sich eine gemäß Anspruch 16 ausgebildete Aluminiumschicht als besonders geeignet erwiesen.

Die mehrlagige Folie ist in einer besonders geeigneten Ausführungsform gemäß Anspruch 17 ausgebildet, vorzugsweise beträgt die Dicke der der mehrlagigen Folie 70 bis 100 µm.

Als besonders geeigenet hat sich eine gemäß Anspruch 18 ausgebildete Klebstoffschicht erwiesen, jedoch sind auch weitere Klebstoffe auf Lösungsmittelbasis oder lösungsmittelfrei geeignet.

Ganz besonders ist der Verpackungsbeutel zur Verpackung von Kaffee geeignet.

Es folgt die Beschreibung von Ausführungsbeispielen der Erfindung anhand der Figuren 1 bis 6.

Figur 1    zeigt in schematischer Darstellung eine im Querschnitt dargestellte Verbundfolie.

Figur 2    zeigt die Aufsicht auf eine Barriereschicht aus einer Aluminiumfolie, die mit einer als Gitternetz ausgebildeten Klebstoffschicht versehen ist.

Figuren
3 bis 6    zeigen in der Aufsicht verschiedene Ausführungsformen von als Gitternetz

-13-

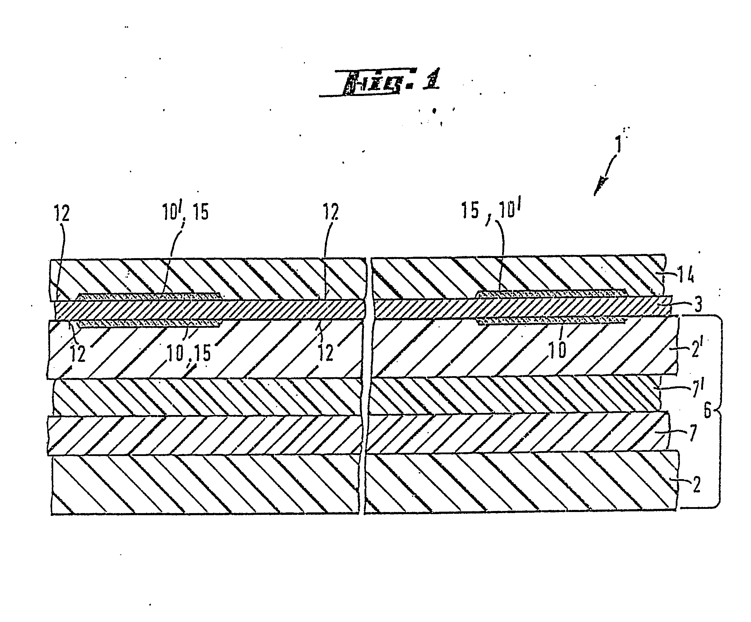

ausgebildeten Klebstoffschichten bei einer
Verbundfolie entsprechend Figur 1.

Bei der in Figur 1 gezeigten Verbundfolie (1) ist die
heißsiegelfähige Kunststoffschicht (2) Bestandteil der
mehrlagigen Folie (6). Die mehrlagige Folie (6)
besteht aus zwei in Material und Dicke
übereinstimmenden Außenlagen und zwei in Material und
Dicke übereinstimmenden Innenlagen. Die Außenlagen,
von denen eine als heißsiegelfähige Kunststoffschicht
(2) der Verbundfolie (1) dient, während die andere
Außenlage (2') mittels der als Gitternetz
ausgebildeten Klebstoffschicht (10) mit einer die
Barriereschicht (3) bildenden Aluminiumfolie verbunden
ist, bestehen aus Polyäthylen einer Dicke von jeweils
28 µm. Die Innenlagen (7, 7') bestehen aus einem
Äthylenvinylacetat-Copolymeren und sind jeweils in
einer Dicke von 18 µm ausgebildet. Die Außenlagen
sind mit den Innenlagen durch Schmelzverbund und die
Innenlagen miteinander durch Verblocken verbunden.
Eine weitere Klebstoffschicht (10') verbindet die
Barriereschicht (3) mit der weiteren Folienschicht
(14).

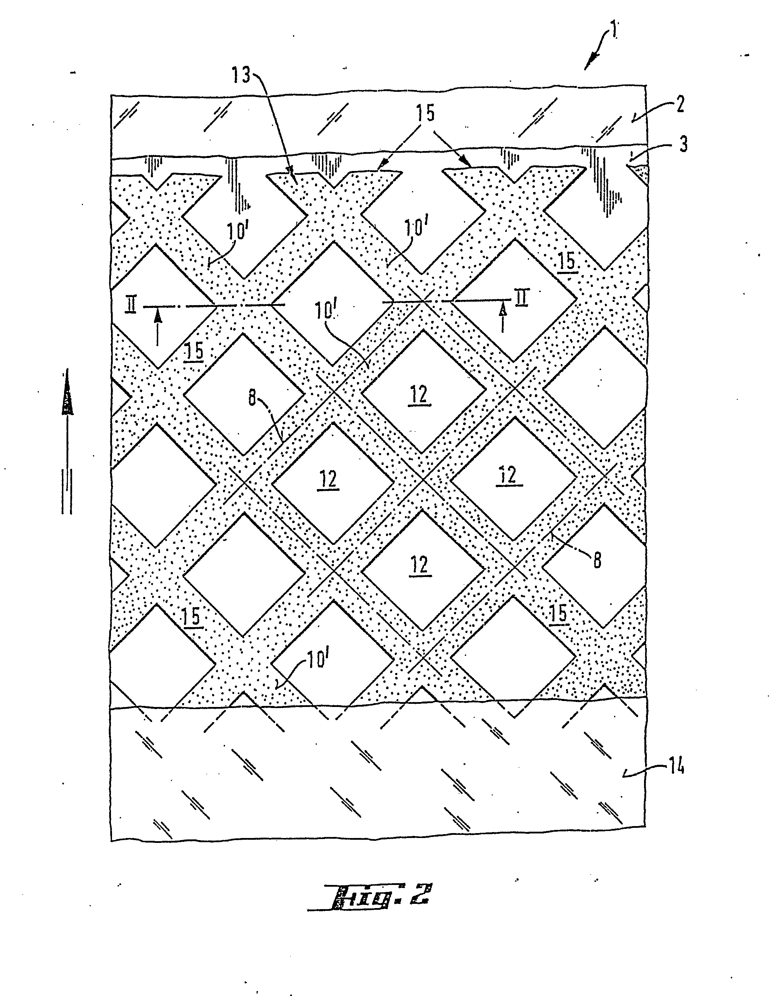

Bei der in Figur 2 gezeigten Barriereschicht (3) aus
Aluminium ist das als Klebstoffschicht dienende
Gitternetz (13) erkennbar. Das Gitternetz (13) besteht
aus einem durch Streifen (15) gebildeten quadratischen
Raster (8), dessen klebstofffreie Flächen (12)
zusammen 46 % der gesamten Klebstoffschichtfläche
ausmachen. Die Streifen (15) sind in einer Breite von
0,9 mm ausgebildet und umschließen jeweils
quadratische klebstofffreie Flächen (12) von 3,6 mm$^2$.

-14-

Die Vierecke des Rasters (8) stehen in der durch den Pfeil gekennzeichneten Richtung, die der späteren Laufrichtung der Verbundfolie entspricht, auf ihrer Spitze.

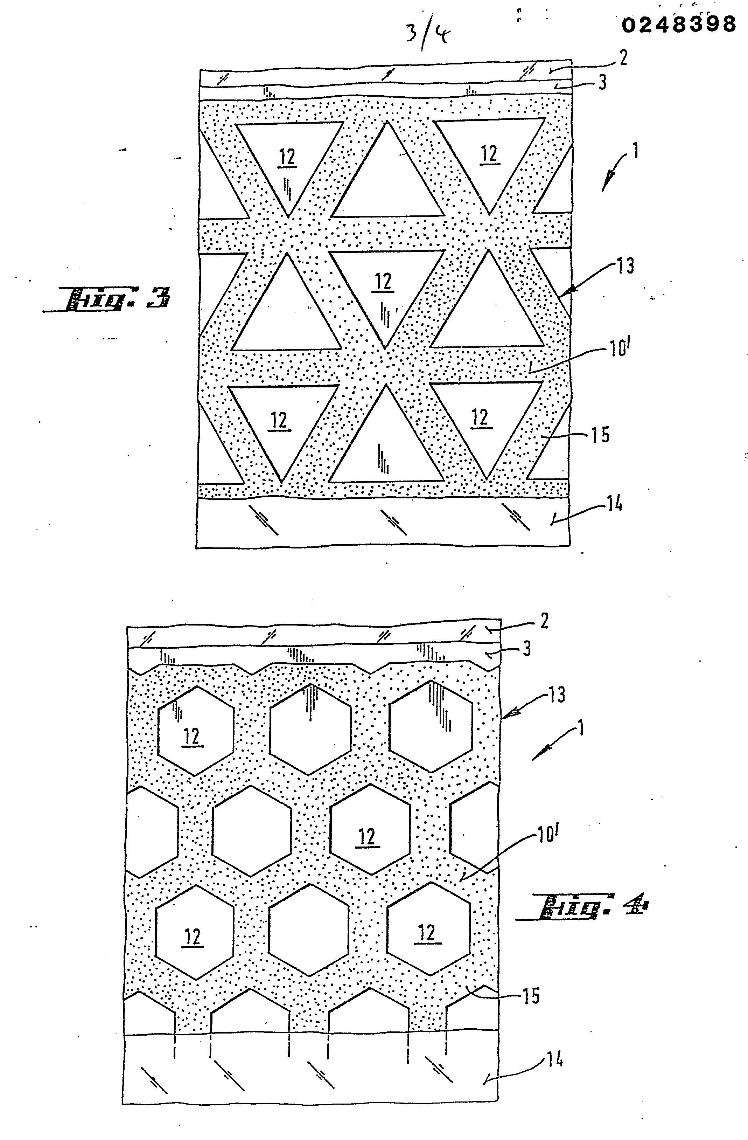

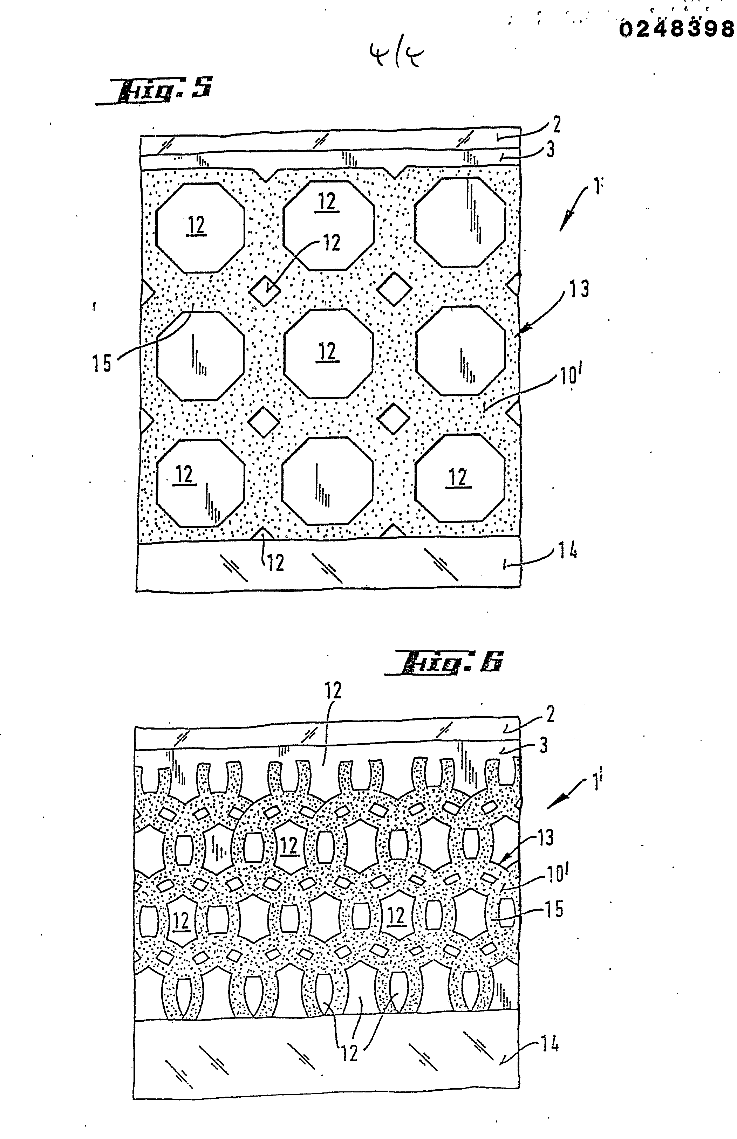

Bei den in Figuren 3 bis 6 dargestellten Verbundfolien (1) sind durch die transparente weitere Folienschicht (14) aus Polypropylen in verschiedenen Geometrien ausgebildete Gitternetze (13), bestehend aus klebstofffreien Flächen (12) und Streifen (15) zu erkennen, aus denen die Klebstoffschichten (10') gebildet sind.

Beispiel:
In einem Abpackversuch, bei dem Kaffeepackungen von 500 g auf einer Schlauchbeutelmaschine vakuumverpackt wurden, wurde die zu Figur 1 beschriebene Verbundfolie im Vergleich zu einer Verbundfolie mit im wesentlichen gleichen Aufbau eingesetzt, wobei die Lagen der Vergleichsfolie jedoch durch einen vollflächigen Klebstoffauftrag miteinander verbunden waren. Während des Abpackversuches zeigte die erfindungsgemäße Verbundfolie ein wesentlich günstigeres dead-fold-Verhalten und eine bessere, d.h.: eckigere Ausformung der Packung.

-15-

13.337

Patentansprüche

1. Verpackungsbeutel aus einer Verbundfolie (1), die
   mehrere Folienschichten auf Polyolefinbasis sowie
   eine zwischen zwei Folienschichten angeordnete,
   als Gitternetz (13) ausgebildete Klebstoffschicht
   (10) aufweist, die:

   a) aus ununterbrochenen und sich schneidenden
      Streifen (15) besteht,

   b) wobei die Streifen (15) klebstofffreie Flächen
      (12) ohne Unterbrechung umschließen,
      dadurch gekennzeichnet, daß

   c) der Verpackungsbeutel als eckige
      Faltbeutelverpackung ausgebildet ist und

   d) die Verbundfolie (1) gebildet ist aus:

      1.) einer mehrlagigen koextrudierten Folie (6),
          die aus einem zwei- bis fünfschichtigen
          zusammengelegten Blasschlauch hergestellt
          ist, der zwei in Material und Dicke
          übereinstimmende Außenlagen (2, 2') und
          zwei in Material und Dicke übereinstimmende
          Innenlagen (7, 7') und ggf. bis zu drei
          Zwischenlagen aufweist, wobei die

-16-

Innenlagen (7, 7') miteinander durch
Verblockung und alle anderen Lagen
durch Schmelzverbindung verbunden sind und
Außenlagen (2, 2') und Innenlagen (7, 7')
aus Polyäthylen oder Polyäthylencopolymeren
mit um mindestens 25 cN unterschiedlicher
mechanischer Schockfestigkeit hergestellt
sind, wobei die heißsiegelfähige
Kunststoffschicht aus der einen Außenlage
(2) der mehrlagigen Folie (6) besteht,
deren andere Außenlage (2') über die
Klebstoffschicht (10)

2.) mit der weiteren Folienschicht (14)
verbunden ist,

e) die Streifen (15) des Gitternetzes (13) eine
Breite von 0,5 bis 1,5 mm, vorzugsweise von 0,8
bis 1,2 mm aufweisen.

2. Verpackungsbeutel nach Anspruch 1, dadurch
gekennzeichnet, daß das Gitternetz (13) aus drei-
bis achteckigen Vielecken besteht.

3. Verpackungsbeutel nach einem der Ansprüche 1 und
2, dadurch gekennzeichnet, daß das Gitternetz (13)
aus regelmäßigen in einem Raster (8) angeordneten
und in Laufrichtung der Verbundfolie (1) auf der
Spitze stehenden Vierecken besteht.

4. Verpackungsbeutel nach einem der Ansprüche 1 bis
2, dadurch gekennzeichnet, daß das Gitternetz (13)
aus Kreisringflächen besteht, deren Umfangslinien
sich mehrfach schneiden.

-17-

5. Verpackungsbeutel nach einem der Ansprüche 1 bis
4, dadurch gekennzeichnet, daß die Flächen (12)
einen Inhalt von 0,6 bis 6,1 mm$^2$, vorzugsweise von
1 bis 4 mm$^2$ aufweisen.

6. Verpackungsbeutel nach einem der Ansprüche 1 bis
5, dadurch gekennzeichnet, daß die
Flächeninhaltssumme der Flächen (12) 25 bis 70 %
der gesamten Klebstoffschichtfläche beträgt.

7. Verpackungsbeuel nach einem der Ansprüche 1 bis 6,
dadurch gekennzeichnet, daß die Klebstoffschicht
(10) in einer Menge von 1,4 bis 2,6 g/m$^2$
aufgetragen ist.

8. Verpackungsbeutel nach einem der Ansprüche 1 bis
7, dadurch gekennzeichnet, daß die weitere
Folienschicht (14) transparent ist und aus einer
biaxial gereckten Polyester-, Polyamid- oder
Polypropylenfolie besteht.

9. Verpackungsbeutel nach einem der Ansprüche 1 bis
8, dadurch gekennzeichnet, daß das Gitternetz (13)
eingefärbt ist.

10. Verpackungsbeutel nach einem der Ansprüche 1 bis
9, dadurch gekennzeichnet, daß zwischen der
weiteren Folienschicht (14) und der Außenlage (2')
der mehrlagigen Folie (6) eine Barriereschicht (3)
angeordnet ist.

11. Verpackungsbeutel nach Anspruch 10, dadurch
gekennzeichnet, daß die Barriereschicht (3) aus

-18-

Aluminium, Polyvinylidenchlorid (PvdC), Polyamid oder Äthylenvinylalkohol (EVOH) besteht.

12. Verpackungsbeutel nach einem der Ansprüche 10 und 11, dadurch gekennzeichnet, daß die Barriereschicht (3) mit einer weiteren Klebstoffschicht (10') mit der weiteren Folienschicht (14) verbunden ist.

13. Verpackungsbeutel nach einem der Ansprüche 10 bis 12, dadurch gekennzeichnet, daß die weitere Klebstoffschicht (10') flächig ausgebildet ist.

14. Verpackungsbeutel nach einem der Ansprüche 10 bis 12, dadurch gekennzeichnet, daß die weitere Klebstoffschicht (10') als Gitternetz (13) ausgebildet ist.

15. Verpackungsbeutel nach Anspruch 10, dadurch gekennzeichnet, daß die Barriereschicht (3) aus Aluminium besteht und durch Metallisierung auf die weitere Folienschicht (14) aufgebracht ist.

16. Verpackungsbeutel nach einem der Ansprüche 1 und 10 bis 14, dadurch gekennzeichnet, daß die Barriereschicht (3) aus Aluminiumfolie besteht und eine Dicke von 7 bis 12 µm aufweist.

17. Verpackungsbeutel nach einem der Ansprüche 1 bis 16, dadurch gekennzeichnet, daß die mehrlagige Folie (6) eine Dicke von 60 bis 130 µm aufweist.

-19-

18. Verpackungsbeutel nach einem der Ansprüche 1 bis
    17, dadurch gekennzeichnet, daß die das Gitternetz
    (13) bildende Klebstoffschicht (10, 10') aus einem
    Ein- oder Zweikomponenten-Polyurethankleber
    besteht.

## Fig. 1

Fig. 2

**Fig. 3**

**Fig. 4**

Fig. 5

Fig. 6

0248398